Europäisches Patentamt

European Patent Office

Office européen des brevets

(19)

(11) Veröffentlichungsnummer: **0 187 135 B1**

(12) **EUROPÄISCHE PATENTSCHRIFT**

(45) Veröffentlichungstag der Patentschrift: 02.10.91

(51) Int. Cl.⁵: **C04B 41/45**, C04B 41/60

(21) Anmeldenummer: 85890318.0

(22) Anmeldetag: 24.12.85

(54) Verfahren zur Farbänderung von Teilbereichen der Oberfläche pigmentierter, hydraulisch gebundener Bauteile.

(30) Priorität: 28.12.84 AT 4113/84

(43) Veröffentlichungstag der Anmeldung:
09.07.86 Patentblatt 86/28

(45) Bekanntmachung des Hinweises auf die
Patenterteilung:
02.10.91 Patentblatt 91/40

(84) Benannte Vertragsstaaten:
BE CH DE FR GB IT LI NL SE

(56) Entgegenhaltungen:
DE-A- 1 646 712
GB-A- 1 330 298

SPRECHSAAL, Band 113, Nr. 1, Januar 1980,
Seiten 2-5, Coburg; F. KRAJCSOVICS
"Anwendung der Plasmatechnik im Bauwesen"

(73) Patentinhaber: Kneidinger, Walter,
Dipl.-Kaufm.
Doppl 10
A-4121 Altenfelden(AT)

(72) Erfinder: Kneidinger, Walter, Dipl.-Kaufm.
Doppl 10
A-4121 Altenfelden(AT)

## Beschreibung

Beton im Hoch- und Tiefbau leidet unter zunehmenden Imageproblemen, in der Verödung des Landschaftsbildes und der Zumutung architektonischer Überladung durch eintönige graue Sichtflächen liegen sicherlich wesentliche Ursachen dafür.

Nachträgliche Farbgestaltung durch oberflächliche Anstriche ist von beschränkter Lebensdauer und erfordert damit wiederkehrenden Erhaltungsaufwand, in Fällen alljahreszeitlicher Witterungsbeanspruchung und im Extrem zusätzlicher mechanischer Beanspruchung etwa bei Verbundpflastern stellt dies meist keine akzeptable Lösung dar.

All dies sind Gründe für den gestalterischen Ausweg, Beton in Masse durchzufärben und damit auf Lebensdauer des Bauteiles mit Farbe zu versehen. Bei einer technisch rationellen Erzeugung ist man allerdings darauf beschränkt, Beton in einer Mischung einfärbig zu gestalten oder bestenfalls durch besondere Mischung verschiedenar Farben kaum steuerbare Marmoriereffekte zu erzielen.

Es wurde nun gefunden, daß man ein bisher nicht bekanntes Spektrum neuer Farbgestaltungsmöglichkeiten durch nachträgliche Temperaturbehandlung pigmentierter hydraulisch gebundener Bauteile erschließen kann.

Die Erfindung betrifft demnach ein Verfahren zur Farbänderung von Teilbereichen der Oberfläche pigmentierter, hydraulisch gebundener Bauteile durch Anwendung erhöhter Temperaturen auf dieselben, welches dadurch gekennzeichnet ist, daß ein fertiger, in der Masse pigmentierter Betonteil ohne nachträglichen Pigmentauftrag in den genannten Teilbereichen der Oberfläche Temperaturen von wenigstens 1.000°C ausgesetzt wird, bis die gewünschte Änderung der Farbe der Oberfläche eingetreten ist.

Einem Artikel von F. Krajcsovics, Sprechsaal 113 (1), 2-5, (1980) ist zu entnehmen, daß sich auf der Betonfläche eine Glasschicht unter Aufhebung der Wasserbindung des Betons auf Grund einer Hochtemperatur-Plasmaflamme bildet, wobei durch allenfalls auf die Oberfläche aufgebrachte Farbmaterialien eine Farbwirkung in der Glasschicht erzielt wird, die natürlich später nicht mehr verändert werden kann. Diese Plasma-Methode eignet sich nicht für die Erzeugung von farbigen Designs auf dem fertigen Betonteil. Der nach dem Plasmaverfahren erhaltene Bauteil ist eine Art Fliese, deren glasharte Oberfläche keiner weiteren Farbänderung mehr zugänglich ist, deren Aussehen bzw. Farbe also allein durch den überaus kostspieligen und apparateaufwendigen Fabrikationsgang bestimmt wird.

Aus der AT-PS 90 095 ist bekannt, Färbungen auf Gegenständen aus Zement, Zementbeton, Stahlbeton oder Kalkstraß zu erzeugen, indem auf die Oberfläche Lösungen von Metallsalzen aufgebracht und sodann die auf diese Weise erzeugten Deckschichten erhitzt werden.

Durch diese Maßnahme werden die Salze in Oxide übergeführt, wobei jedoch Säureanionen freigesetzt werden, die sich äußerst nachteilig auf das umgebende Gefüge des Bauteiles auswirken.

Erfindungsgemäß werden pigmentierte Bauteile behandelt und im Zuge dieser Behandlung werden die Oxidpigmente in eine andere Kristallstruktur bzw. Molekularstruktur übergeführt, wobei sie ihre Farbe ändern, ohne Anionen abzuspalten.

In der DE-PS 649 075 ist ein Verfahren beschrieben, gemäß welchem eisenoxidhydrathaltiges Kalkgestein während langer Zeitperioden von bis zu 30 Stunden auf Temperaturen bis zu 350°C erhitzt wird. Die Anwendung derart niedriger Temperaturen führt bei hydratgebundenen pigmentierten Bauteilen, abgesehen vom Nachteil der langdauernden Behandlung, zu keinen befriedigenden Ergebnissen. Andererseits können bei Kalkgestein die erfindungsgemäß angewendeten hohen Temperaturen nicht zur Einwirkung gebracht werden.

Im Zusammenhang mit der Ziegelherstellung wurde in der US-PS 2 902 739 vorgeschlagen, auf einen Ziegel oder anderen Tonformling vor dem Brennen einen Überzug bestehend aus einem flüssigen Trägerstoff, einer Metallverbindung und einer geringen Menge eines Farbstoffes aufzubringen und sodann den Ziegel zu brennen.

Abgesehen vom anders gearteten Ausgangsmaterial unterscheidet sich das erfindungsgemäße Verfahren grundsätzlich von dem der US-PS 2 902 739, bei dem durch chemische Reaktion Farbänderungen erzeugt und zu diesem Zweck Fremdstoffe zugesetzt werden.

Erfindungsgemäß wird nicht nur ein Pigment anderer Farbe geschaffen, sondern gibt das Verfahren erstmals die Möglichkeit zur planmäßigen, malerischen mehrfärbigen Oberflächengestaltung in der Bauteilsubstanz selbst ohne nachträglichen Farbauftrag. Es hat sich weiters gezeigt, daß im Bindemittel Beton Farbeffekte erzielbar sind, welche am bloßen Pigment bisher nicht bekannt waren, bzw. mit der gleichen Menge Pigment durch einfaches Untermischen im Beton nicht erreicht werden können.

Es konnte von vornherein auch nicht abgesehen werden, wie sich die Pigmente in hydraulischer Bindung verhalten würden, bzw. ob die notwendige Temperaturbehandlung das Baustoffgefüge nicht beeinträchtigt, werden doch normalerweise für besondere Temperaturbeanspruchungen auch spezielle feuerfeste Zemente eingesetzt.

Richtet man eine Acetylen-Sauerstoffflamme auf mit Eisenoxidgelb eingefärbten Beton, so zeigt sich im Flammkern ziemlich schnell ein Bereich, in welchem der Beton Schmelzerscheinungen aufweist, es schließt sich ein schwarz gefärbter Bereich an, darauf kommt eine gelblich weiße Farbe, darauf wieder Schwarz, in Folge Rot, welches in das originale Gelb übergeht. Die konzentrische Anordnung dieser Farbbereiche um den Flammmittelpunkt weist auf die Temperaturabhängigkeit dieser Farbeffekte hin bzw. auch darauf, ob die behandelte Fläche in den oxidierenden oder reduzierenden Bereichen der Flamme liegt. Mit entsprechender Temperatur- d.h. Brennerführung kann aus dem pigmentierten Bauteil der jeweils gewünschte Effekt stärker oder schwächer herausgeholt werden. Mit der Dauer der Temperaturbelastung nimmt man weiters Einfluß auf die Eindringtiefe der Umfärbung im Bauteil. Es ist neben den ästhetischen Kriterien der wesentliche Vorteil dieser Farbgestaltung, daß sie sich nicht wie bei nachträglichem Auftrag mit oder ohne Bindemittel vom artfremden Untergrund ablösen kann.

Eine mehrfärbige Oberflächengestaltung hat den weiteren Vorteil, daß Farbschattierungen, wie sie an einfärbigen Sichtbetonflächen durch Trennmittel, Rüttlereffekte, WZ-Wertschwankungen usw. immer wieder unangenehm auftreten, kaschiert werden.

Betonnachbehandlung im Sinne eines Oberflächenschutzes kann hier mit geringem Aufwand farblos als Oberflächenversiegelung oder schmutzabweisende Hydrophobierung angeschlossen werden.

Durch die Auswahl in ihrer Temperaturempfindlichkeit abgestimmter Pigmente und Pigmentmischungen - aus Kostengründen meist Eisenoxide - ergeben sich ansprechende Möglichkeiten der Oberflächengestaltung, sei es in flächiger Schattierung oder nach jedem gewünschten Ornamentschema. Massenfertigteilen kann dabei jeweils ein individuelles Gepräge oder mittels Schablonen ein gleichmäßiges Aussehen gegeben werden.

Für die Temperaturzuführung bieten sich elektrische Widerstandsheizungen an, welche direkt am Bauteil angebracht werden können und damit beliebige graphische Strukturen ermöglichen. Die wirksame Strahlungstemperatur solcher Widerstandsheizungen bzw. Heizdrahtlegierungen liegt bei 1250 - 1400 K.

Auch mit ausreichend erhitzten Gasen sind Farbänderungen möglich, vorteilhaft ist die Gas-Luft- bzw. Gas-Sauerstoffflamme. Die relativ hohen Temperaturen erlauben ein schnelles Arbeiten und damit mehr oberflächliche Temperaturbelastung im Interesse geringer Temperaturspannungen im Bauteil. Die Möglichkeit der Temperaturvariation durch Regelung der Vorschubgeschwindigkeit und des Brennerabstandes sowie die reduzierende Flamme erweitern den Umfang der erreichbaren Farbskala.

Die mehrfärbige Ornamentieruug von Betonoberflächen kann auch durch deren Profilierung beeinflußt bzw. gestaltet werden, indem einerseits erhabene und eingetiefte Stellen unterschiedlicher Temperaturbelastung ausgesetzt sind, die eingetieften Stellen weiters auch - etwa mit Sand - abgedeckt werden können, wodurch die Temperatureinwirkung weitgehend auf die freiliegenden Bereiche beschränkt bleibt.

Selbstverständlich können auch alle anderen Möglichkeiten ausreichender Wärmezuführung, wie sie z.B. aus der Schweißtechnologie und Pyrotechnik bekannt sind, eingesetzt werden.

Die Erfindung wird durch die folgenden Beispiele näher erläutert.

Beispiel 1: Ein Heizdraht aus einem elektrischen Heizstrahler wird auf eine mit 5 % Eisenoxidgelb (bezogen auf das Zementgewicht) eingefärbte Zementmörtelprobe gelegt und 1 - 5 min auf Rotglut beheizt. An der Auflagefläche entsteht dadurch ein roter Streifen im gelbgefärbten Beton.

Beispiel 2: Auf ein mit 5 % Eisenoxidrot durchgefärbtes Betonmuster wird die Flamme eines Autogenschweißbrenners gerichtet. Durch Variation des Brennerabstandes zur Betonoberfläche in der Bewegung und/oder der Verweildauer in verschiedenen Stellungen sind schwarze und gelblichweiße Umfärbungen erzielbar.

Beispiel 3: Ein mit 5 % Eisenoxidschwarz durchgefärbtes Betonstück wird wie in Beispiel 2 mit einer Gas-Sauerstoffflamme erhitzt. Als Farbentwicklung zeigt sich Gelb-Weiß, bei weiterer Erhitzung Schwarz, welches bedeutend tiefer und kräftiger ist als die originale Farbe.

Beispiel 4: Eine mit 5 % Eisenoxidgelb gefärbte Betonmischung wird auf einer Fertigteil-Strukturmatrize als Schalung ausgehärtet. Der entstehende Negativabdruck zeigt Eintiefungen, welche horizontal liegend mit Sand zugestreut werden. Bei Behandlung mit der Azetylen-Sauerstoffflamme färben nur die freiliegenden Erhebungen zwischen den abgedeckten Eintiefungen wie gewünscht um.

**Patentansprüche**

1.  Verfahren zur Farbänderung von Teilbereichen der Oberfläche pigmentierter, hydraulisch gebundener Bauteile durch Anwendung erhöhter Temperaturen auf dieselben, dadurch gekennzeichnet, daß ein fertiger, in der Masse pigmentierter Betonteil ohne nachträglichen Pigmentauftrag in den genannten Teilbereichen der Oberfläche Temperaturen von wenigstens 1.000°C ausgesetzt wird, bis die gewünschte Änderung der Farbe der Oberfläche eingetreten ist.

2.  Verfahren nach Anspruch 1, dadurch gekennzeichnet, daß die genannten Teilbereiche der Oberfläche der Temperatur einer Gas-Sauerstoffflamme ausgesetzt werden.

**3.** Verfahren nach Anspruch 1 oder 2, dadurch gekennzeichnet, daß die genannten Teilbereiche der Oberfläche bis zum Glühen und/oder beginnenden Schmelzen erhitzt werden.

## Claims

**1.** A process for changing the colour of partial areas of a surface of pigmented, hydraulically bonded structural elements by applying increased temperatures on these areas, characterized in that a bulk-pigmented solid concrete element without additional pigmentation is exposed in the above mentioned partial areas of the surface to a temperature of at least 1 000 degreas C until the desired change of colour of said surface is obtained.

**2.** A proces according to claim 1, characterized in that the above mentioned partial areas of the surface are exposed to the temperature of a gas-oxygen flame.

**3.** A process according to claim 1 or 2, characterized in that the above mentioned partial areas of the surface are heated until glowing and/or starting of melting.

## Revendications

**1.** Procede pour le changement de couleur des domaines superficiels partiels des elements de construction etant pigmentes et obtenus par composition hydraulique, par application des temperatures eleves aux ledites domaines, caracterise par le fait qu'on expose un element a beton final etant pigmente de masse, sans surcharge de pigment, dans lesdites domaines superficiels aux temperatures au moins de 1000 C jusqu'on obtient le changement desire de couleur superficiel.

**2.** Procede selon la revendication 1, caracterise par le fait qu'on expose lesdites domaines superficiels partiels a la temperature d'une flamme de gaz et oxygene.

**3.** Procede selon la revendication 1 ou 2, caracterise par le fait qu'on echauffe lesdites domaines superficiels partiels jusqu a incandescence et/ou en liquescence.